# EUROPEAN PATENT APPLICATION

(11) **EP 3 816 674 A1**
(43) Date of publication of application: **05.05.2021**
(21) Application number: 19821928.9
(22) Date of filing: 07.06.2019
(51) Int. Cl.: G01V 8/20, G01J 1/42, G01V 3/12

(54) **OBJECT DETECTING DEVICE**

(30) Priority: 19.06.2018 JP 2018116009
(71) Applicant: Optex Co., Ltd., Shiga 520-0101 (JP)
(72) Inventor: KONDO, Takashi, Otsu-shi Shiga 520-0101 (JP); USUI, Toshimasa, Otsu-shi Shiga 520-0101 (JP); NISHIHARA, Kazutaka, Otsu-shi Shiga 520-0101 (JP); IWATA, Yohei, Otsu-shi Shiga 520-0101 (JP)
(74) Representative: Herrero & Asociados, S.L.
(86) International application number: PCT/JP2019/022746
(87) International publication number: WO 2019/244672

(57) **Abstract**

Provided is an object detecting device that does not require an operator to perform a complicated operation onsite and that allows the number of components to be reduced while a detection range can be set. Provided are: at least two sensor units (31, 32) configured to receive detection rays from different detection areas (A1, A2), the different detection areas (A1, A2) being arranged in an up-down direction and having center lines (C1, C2) extending in different diagonally downward directions; and an object detection determination section (62) configured to detect an object in a detection range based on one or more of at least two detection signals (SA1, SA2) corresponding to amounts of detection rays received by the at least two sensor units (31, 32), respectively, the detection range being determined by setting a reference (F1th) for the at least two detection signals (SA1, SA2).

## Description

### CROSS REFERENCE TO THE RELATED APPLICATION

This application is based on and claims Convention priority to Japanese patent application No. 2018-116009, filed June 19, 2018, the entire disclosure of which is herein incorporated by reference as a part of this application.

### BACKGROUND OF THE INVENTION

### (Field of the Invention)

The present invention relates to an object detecting device for detecting an object.

### (Description of Related Art)

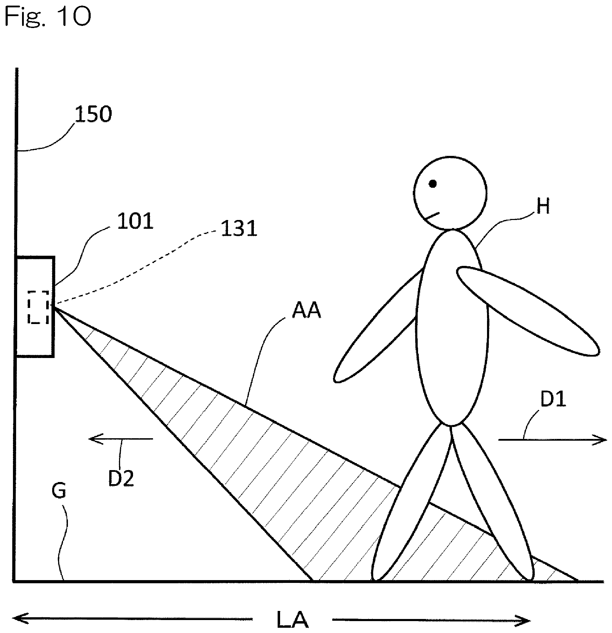

To date, a PIR (passive infrared ray) human body detecting device 101 mounted on, for example, a wall surface 150 has been provided with one sensor unit 131 as shown in Fig. 10. A light receiving direction of a light receiving element (not shown) of the sensor unit 131 is adjusted toward a ground G to set a detection area AA (see Patent Document 1). A range of a human body detection distance LA from the human body detecting device 101 in the detection area AA is a detection range for detecting a human body H.

The detection range varies depending on, for example, usage of the human body detecting device 101. Therefore, in general, the human body detecting device 101 has an adjusting mechanism (not shown) for setting the direction of the light receiving element (not shown) of the sensor unit 131 to any of directions in a plurality of steps. The adjusting mechanism is operated to shift the detection area AA to a farther direction D1 or a closer direction D2. Thus, the human body detection distance LA, that is, the detection range, is changed.

### [Related Document]

### [Patent Document]

[Patent Document 1] JP Patent No. 3086406

### SUMMARY OF THE INVENTION

However, an operator needs to operate the adjusting mechanism onsite for adjusting the human body detection distance LA, thereby complicating the operation. Furthermore, disposition of the adjusting mechanism increases the number of components of the human body detecting device 101.

Therefore, an object of the present invention is to provide an object detecting device that does not require an operator to perform a complicated operation onsite and that allows the number of components to be reduced while a detection range can be set, in order to solve the aforementioned problem.

In order to attain the aforementioned object, an object detecting device according to the present invention includes: at least two sensor units configured to receive detection rays from different detection areas, the different detection areas being arranged in an up-down direction and having center lines extending in different diagonally downward directions; and an object detection determination section configured to detect an object in a detection range based on one or more of at least two detection signals corresponding to amounts of detection rays received by the at least two sensor units, respectively, the detection range being determined by setting a reference for the at least two detection signals.

The center lines may extend in different diagonal directions on almost the same vertical plane.

In this configuration, at least two sensor units receive detection rays from different detection areas, and the different detection areas are arranged in the up-down direction and have center lines extending in different diagonally downward directions, so that a detection area that is wider in the farther and closer directions as a whole can be achieved as compared with a case where only one sensor unit is disposed. Among the wide detection areas, references for at least two detection signals are set to determine the detection range, so that the detection area itself need not be changed. Therefore, a complicated operation for adjusting an object detection distance is not required. The adjusting mechanism need not be mounted to the object detecting device, thereby reducing the number of components of the object detecting device.

Each of the "different detection areas" is preferably a detection area fixed relative to the object detecting device. In a case where the detection area is fixed relative to the object detecting device, the object detecting device need not have an adjusting mechanism for adjusting an object detection distance at all. "The detection area fixed relative to the object detecting device" means that a relationship between relative positions of the different detection areas does not change. For example, even if absolute positions of the detection areas are shifted by moving the object detecting device itself, each of the detection areas is fixed relative to the object detecting device.

The term "at least two detection signals corresponding to amounts of detection rays received by the at least two sensor units, respectively" may include information other than information about a distance to an object. That is, even if each detection ray has properties that do not allow a distance to an object to be obtained, a reference for a detection signal from the detection ray may be set to determine the detection range, so that an object in the detection range can be accurately detected.

In the object detecting device according to one embodiment, setting the reference for the at least two detection signals may be setting a threshold value for a calculation result of one or a plurality of predetermined arithmetic expressions to which the at least two detection signals are applied.

In this configuration, a threshold value for a calculation result of one or a plurality of predetermined arithmetic expressions to which the at least two detection signals are applied, is set to determine the detection range, so that the detection range can be determined merely by designating a threshold value of a numerical value. The designation of the numerical value is performed more easily than an operation on the adjusting mechanism. Particularly, in a case where the object detecting device has a communication section, the numerical value can be remotely designated. In conventional art in which the direction of the light receiving element is set by the adjusting mechanism, since the adjusting mechanism is set to one of a plurality of predetermined steps, the detection range is merely changed stepwise. However, in a case where the numerical value is designated, the detection range can be minutely determined.

The one or the plurality of predetermined arithmetic expressions may include one function in which one or the entirety of the at least two detection signals is a parameter. In this configuration, the calculation result can be obtained merely by substituting, into the function, one or the entirety of the at least two detection signals as the parameter. Accordingly, an object detection distance is determined uniquely by the output of the function, and, therefore, the object detection distance can be easily obtained from at least two detection signals.

In the object detecting device according to one embodiment, the one function may be a function in which two detection signals among the at least two detection signals are each set as the parameter to obtain a ratio between the at least two detection signals. In this configuration, the detection range is determined according to a function for obtaining a ratio between the at least two detection signals, so that fluctuation of the detection range is little. This is because, in a case where fluctuation of an amount of received detection rays is caused by a factor other than detection of an object, the magnitudes of all of the at least two detection signals fluctuate, and, therefore, the ratio allows the fluctuation to be canceled. Therefore, the calculation result is unlikely to be influenced by fluctuation of an amount of received detection rays caused by a factor other than detection of an object.

In the object detecting device according to an alternative embodiment, the one function may be a function in which two detection signals among the at least two detection signals are each set as the parameter to obtain a difference between the at least two detection signals. In this configuration, in a case where the same amounts of noise components are contained in the at least two detection signals, the noise components are cancelled by the function for obtaining the difference. Therefore, the calculation result is unlikely to be influenced by the noise component.

In the object detecting device according to one embodiment, setting the reference for the at least two detection signals may be setting a detection threshold value for at least one of the at least two detection signals. In this configuration, the detection range is determined by setting the detection threshold value for at least one of the at least two detection signals, so that any detection range can be easily determined.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view of an object detecting device and a peripheral region therearound according to each of a first to a fifth embodiments;
Fig. 2 is an exploded perspective view of the object detecting device shown in Fig. 1;
Fig. 3 is an exploded perspective view of a sensor body of the object detecting device shown in Fig. 2;
Fig. 4 is a schematic block diagram illustrating the object detecting device according to each of the first to the fourth embodiments;
Fig. 5 illustrates principles of some embodiments, and includes a diagram (a) representing a side view of a detection area, a diagram (b) representing a graph of two detection signal values against a distance, and a diagram (c) representing a graph of a calculation result obtained by the object detecting device according to the first embodiment against a distance;
Fig. 6 shows a graph of a calculation result obtained by the object detecting device according to the second embodiment against a distance;
Fig. 7 shows a graph of a calculation result obtained by the object detecting device according to the third embodiment against a distance;
Fig. 8 shows a graph of a calculation result obtained by the object detecting device according to the fourth embodiment against a distance;
Fig. 9 is a schematic block diagram illustrating the object detecting device according to the fifth embodiment; and
Fig. 10 is a side view of a conventional object detecting device and a peripheral region therearound.

### DESCRIPTION OF EMBODIMENTS

Some embodiments will be described below with reference to the drawings. However, the present invention is not limited to the embodiments.

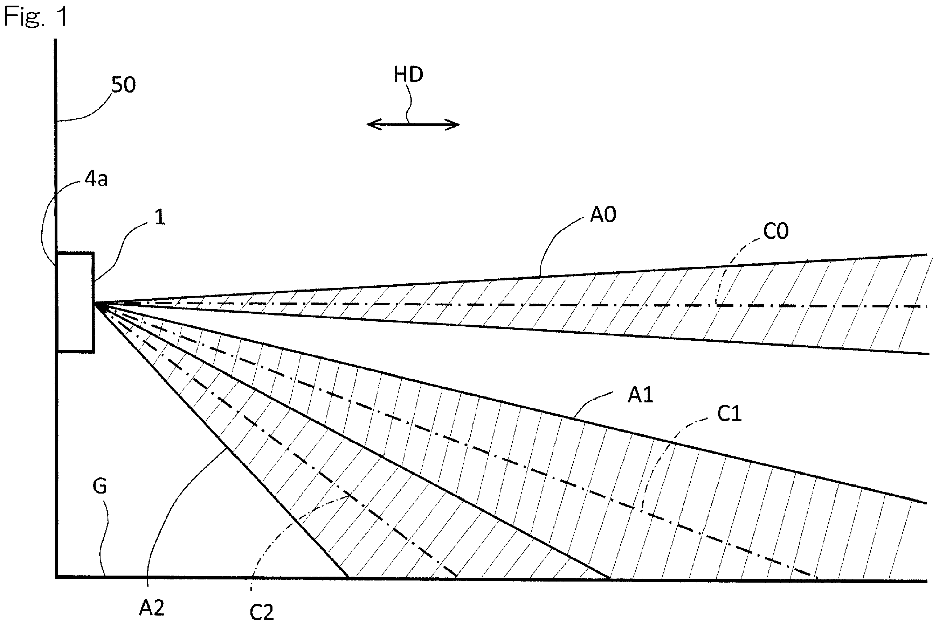

Fig. 1 shows an object detecting device 1 according to each of a first to a fifth embodiments. In the following description, in each of the embodiments, the object detecting device 1 is, as one example, a human body detecting device for detecting a human body. The human body detecting device 1 is used as, for example, a start switch for a security alarm device. In the illustrated example, the human body detecting device 1 is mounted to a wall surface 50 on the outer side of a house at a height close to an average height of a waist of a human body. However, the human body detecting device 1 may be disposed at any position and height. For the human body detecting device 1, a horizontal-direction detection area A0, a first diagonal-direction detection area (hereinafter, simply referred to as "first detection area") A1, and a second diagonal-direction detection area (hereinafter, simply referred to as "second detection area") A2 are set as its detection areas.

A center line C0 of the horizontal-direction detection area A0 extends in a horizontal direction HD, and the detection area A0 does not reach a ground G. A first and a second center lines C1 and C2 of the first and the second detection areas A1 and A2 extend in different diagonally downward directions, respectively, in the vertical plane. In the illustrated example, the second center line C2 is disposed below the first center line C1. Therefore, the first detection area A1 is farther from the human body detecting device 1 than the second detection area A2 is.

The horizontal-direction detection area A0, and the first and the second detection areas A1, A2 are arranged in the up-down direction. That is, the horizontal-direction detection area A0, and the first and the second detection areas A1, A2 are arranged from the upper side toward the lower side in order, respectively. Therefore, the center lines C0, C1, and C2 of the areas A0, A1, and A2 are in almost the same vertical plane.

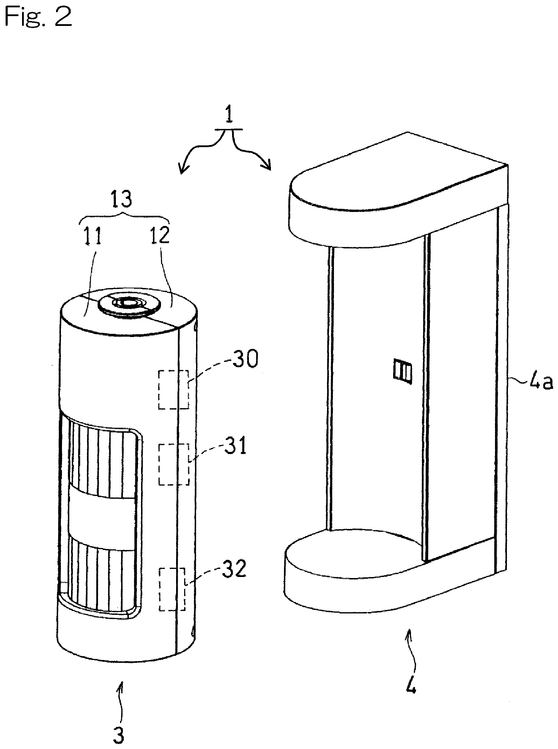

Fig. 2 is an exploded perspective view of the human body detecting device 1. The human body detecting device 1 includes a sensor body 3 and a bracket 4. A rear surface 4a of the bracket is mounted to the wall surface 50 (Fig. 1). The sensor body 3 has a case 13 that includes a sensor cover 11 and a back box 12. The sensor body 3 includes a horizontal-direction sensor unit 30, a first detection area sensor unit 31, and a second detection area sensor unit 32.

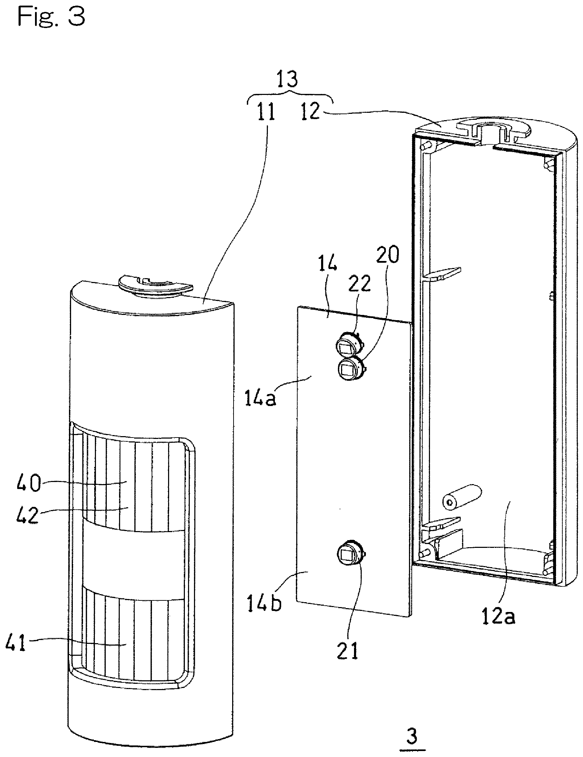

As shown in Fig. 3, the sensor body 3 further includes a sensor substrate 14. The sensor substrate 14 is mounted in a storage space 12a of the back box 12 and has a front face covered with the sensor cover 11. Thus, the sensor substrate 14 is stored in the case 13.

A horizontal-direction detecting element 20 for the horizontal-direction detection area A0 (Fig. 1), a first diagonal-direction detecting element 21 for the first detection area A1 (Fig. 1), and a second diagonal-direction detecting element 22 for the second detection area A2 (Fig. 1) are mounted to the sensor substrate 14. In the present embodiment, the detecting elements 20 to 22 are pyroelectric elements, and receive infrared rays (detection rays). The detecting elements 20 to 22 are aligned in-line in the up-down direction. On an upper side 14a of the substrate 14, the second diagonal-direction detecting element 22 is disposed immediately above the horizontal-direction detecting element 20. The first diagonal-direction detecting element 21 is disposed on a lower side 14b of the substrate 14. The horizontal-direction detecting element 20 and the first diagonal-direction detecting element 21 face forward in the horizontal direction, whereas the second diagonal-direction detecting element 22 faces in the diagonally down-forward direction. In the present embodiment, the human body detecting device 1 does not have an adjusting mechanism for adjusting the directions of the detecting elements 20 to 22. However, the adjusting mechanism may be provided.

On the front face of the sensor cover 11, a horizontal-direction lens 40 for converging infrared rays from the horizontal-direction detection area A0 (Fig. 1), a first diagonal-direction lens 41 for converging infrared rays from the first detection area A1 (Fig. 1), and a second diagonal-direction lens 42 for converging infrared rays from the second detection area A2 (Fig. 1) are disposed. In the illustrated example, the lenses 40 to 42 are each a Fresnel lens. The horizontal-direction lens 40 and the second diagonal-direction lens 42 are implemented by a single or same Fresnel lens. The first diagonal-direction lens 41 is disposed below the Fresnel lens that doubles as the horizontal-direction lens 40 and the second diagonal-direction lens 42.

The respective horizontal-direction lens 40, the first diagonal-direction lens 41, and the second diagonal-direction lens 42 are combined with, or in co-operation with, the horizontal-direction detecting element 20, the first diagonal-direction detecting element 21, and the second diagonal-direction detecting element 22 so as to form the horizontal-direction sensor unit 30 (Fig. 2), the first detection area sensor unit 31 (Fig. 2), and the second detection area sensor unit 32 (Fig. 2), respectively. Specifically, the respective lenses 40 to 42 allow infrared rays in the detection areas A0 to A2 (Fig. 1) to be converged on the pyroelectric elements 20 to 22, whereby the sensor units 30 to 32 (Fig. 2) receive infrared rays in the detection areas A0 to A2 (Fig. 1), respectively.

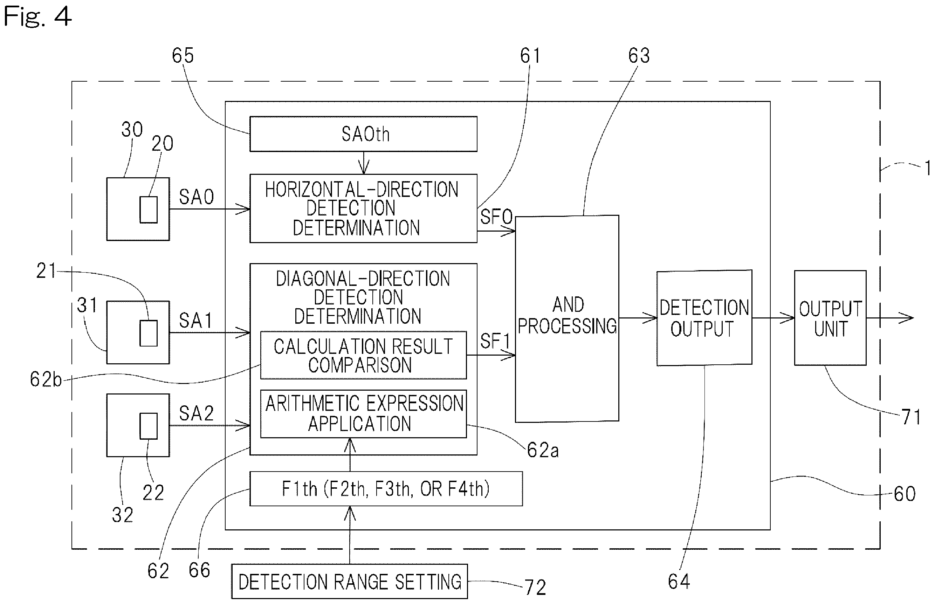

The human body detecting device 1 further includes a circuit substrate (not shown) that includes a microcomputer in the back box 12. A processing unit 60 configured on the circuit substrate will be described with reference to a block diagram shown in Fig. 4.

The processing unit 60 includes a horizontal-direction detection determination section 61, a diagonal-direction detection determination section (object detection determination section) 62, an AND processing section 63, and a detection output section 64. The processing unit 60 further includes a horizontal-direction threshold value storage section 65 for storing a horizontal-direction detection threshold value SA0th, and a diagonal-direction threshold value storage section 66 for storing a diagonal-direction detection threshold value (calculation result threshold value) F1th. The calculation result threshold value F1th represents a reference for a first and a second detection signal values SA1, SA2 as described below. By setting the calculation result threshold value F1th, a detection range is set in a range of the first and/or the second detection areas A1, A2 (Fig. 1).

A horizontal-direction detection signal value SA0 is inputted to the horizontal-direction detection determination section 61 from the horizontal-direction sensor unit 30. The horizontal-direction detection determination section 61 compares the horizontal-direction detection signal value SA0 with the horizontal-direction detection threshold value SA0th. The horizontal-direction detection determination section 61 sets a horizontal-direction detection signal SF0 to "on" when the horizontal-direction detection signal value SA0 is greater than or equal to the threshold value SA0th, and outputs the horizontal-direction detection signal SF0 to the AND processing section 63. The horizontal-direction detection signal SF0 includes a flag or the like, and is, for example, a signal having either of two values of "on" and "off".

To the diagonal-direction detection determination section 62, the first diagonal-direction detection signal value (hereinafter, simply referred to as "first detection signal value") SA1 is inputted from the first detection area sensor unit 31, and the second diagonal-direction detection signal value (hereinafter, simply referred to as "second detection signal value") SA2 is inputted from the second detection area sensor unit 32. The detection signal values SA0 to SA2 represent signals having levels corresponding to amounts of infrared rays received by the pyroelectric elements 20 to 22, respectively. The diagonal-direction detection determination section 62 detects a human body in the detection range, based on the first and the second detection signal values SA1, SA2, as described below.

The diagonal-direction detection determination section 62 has an arithmetic expression application unit 62a and a calculation result comparison unit 62b. The arithmetic expression application unit 62a applies the first and the second detection signal values SA1, SA2 to a predetermined arithmetic expression. That is, actual detection signal values are substituted into one function (arithmetic expression) in which the first and the second detection signal values SA1, SA2 are parameters. The calculation result comparison unit 62b compares the calculation result with the diagonal-direction detection threshold value (calculation result threshold value) F1th. In a case where the calculation result is greater than or equal to the threshold value F1th, a diagonal-direction detection signal SF1 is set to "on", and outputted to the AND processing section 63. The diagonal-direction detection signal SF1 includes a flag or the like, and is, for example, a signal having either of two values of "on" and "off".

The AND processing section 63 receives both the horizontal-direction detection signal SF0 having been set to "on" and the diagonal-direction detection signal SF1 having been set to "on", and outputs a human body detection signal to the detection output section 64. The AND processing section 63 refers to not only the diagonal-direction detection signal SF1 but also the horizontal-direction detection signal SF0. Therefore, a small animal or the like in the detection range can be prevented from being erroneously detected. This is based on the arrangement in that the horizontal-direction detection area A0 (Fig. 1) is set at such a height that does not allow entering of a small animal. The horizontal-direction detection area A0 may be omitted. In this case, the horizontal-direction sensor unit 30, the horizontal-direction detection determination section 61, the AND processing section 63, and the horizontal-direction threshold value storage section 65 are omitted.

The detection output section 64 outputs a signal to an output unit 71 in the human body detecting device 1. In a case where the output unit 71 receives the signal, notification that a human body has been detected in the detection range is made to a unit outside the human body detecting device 1. The output unit 71 may be a notification unit for making notification to a security guard system in a case where the human body detecting device 1 is a security device. The output unit 71 causes a LED to emit light, thereby issuing an alarm. In an alternative embodiment, the output unit 71 may be a wireless transmitter for wirelessly transmitting a signal indicating that a human body has been detected. In another alternative embodiment, the output unit 71 may be wiring connected to another device such as an illumination device (not shown). The illumination device turns on illumination upon receiving, via the wiring, a signal indicating that a human body has been detected.

A detection range setting section 72 for setting the diagonal-direction detection threshold value F1th to be stored in the diagonal-direction threshold value storage section 66 is disposed outside the human body detecting device 1. The detection range setting section 72 may be mounted to a mobile terminal such as a smartphone capable of wirelessly communicating with the human body detecting device 1 through, for example, Bluetooth (Registered Trademark). Alternatively, for example, the detection range setting section 72 may be mounted to a computer capable of wirelessly communicating with the human body detecting device 1 via a wireless transmitter. The wireless transmitter may or may not double as the output unit 71. The horizontal-direction detection threshold value SA0th is a fixed value or is set by the human body detecting device 1 itself, unlike the diagonal-direction detection threshold value F1th. However, the horizontal-direction detection threshold value SA0th may also be set by the detection range setting section 72.

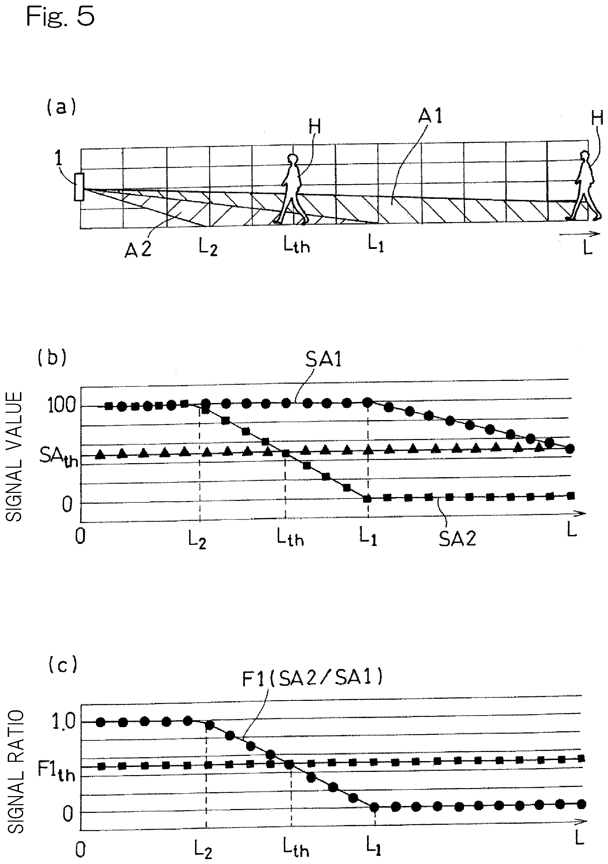

Next, the predetermined arithmetic expression used by the arithmetic expression application unit 62a will be described in detail with reference to diagrams (a) to (c) of Fig. 5. In the diagrams (a) to (c) of Fig. 5, a horizontal distance L from the human body detecting device 1 in the lateral direction on the drawing sheet surface is shown. The distance L in the lateral direction on the drawing sheet surface is uniform throughout the diagrams (a) to (c) of Fig. 5. Under this condition, diagrams (b) and (c) of Fig. 5 each show graphs for the detection signals SA1, SA2 obtained when a human body H is detected at the distance L in the detection areas A1, A2 shown in the diagram (a) of Fig. 5, that is, graphs of the detection signals SA1, SA2 against the human body detection distance L. The diagram (a) of Fig. 5 shows the principles of the preceding embodiments, and therefore does not show the horizontal-direction detection area A0 (Fig. 1).

Specifically, the diagram (b) of Fig. 5 shows graphs of the first and the second detection signal values SA1, SA2 against the human body detection distance L. In the diagram (b) of Fig. 5, the vertical axis represents a signal value. The signal value is a normalized value with the maximum value being 100. A broken line including round plots represents the first detection signal value SA1, and a broken line including square plots represents the second detection signal value SA2. In the diagram (b) of Fig. 5, a straight line including triangular plots represents a detection signal threshold value SAth. The vertical axis for the graph represents the normalized values. Therefore, although the detection signal values SA1, SA2 and the detection signal threshold value SAth are also represented by the symbols, the values in the graph are the normalized values thereof.

The detection signal values SA1, SA2 are each equal to a proportion of infrared rays blocked by the human body H. Therefore, the first detection signal value SA1 is proportional to the human body detection distance L so as to form a negative gradient in a case where the human body detection distance L is greater than the distance L1, corresponding to a closer point of boundary points at which the detection area A1 reaches the ground G. That is, the greater the human body detection distance L is, the less a proportion of blocking infrared rays is. In a case where the human body detection distance L is less than or equal to the distance L1, since infrared rays are always blocked by a human body, the first detection signal value SA1 indicates the maximum value corresponding to 100%.

In a case where the human body detection distance L is greater than the distance L1, corresponding to a farther point of boundary points at which the detection area A2 reaches the ground G, the human body detection distance L is outside the detection area A2 and the second detection signal value SA2 indicates zero. In a case where the human body detection distance L is greater than the distance L2, corresponding to a closer point of the boundary points at which the detection area A2 reaches the ground G and less than or equal to the distance L1, the second detection signal value SA2 is proportional to the human body detection distance L so as to form a negative gradient. That is, the greater the human body detection distance L is, the less a proportion of blocking infrared rays is. In a case where the human body detection distance L is less than or equal to the distance L2, since infrared rays are always blocked by a human body, the second detection signal value SA2 indicates the maximum value corresponding to 100%.

In the present embodiment, an arithmetic expression F1 used by the arithmetic expression application unit 62a in Fig. 4 is a ratio of the second detection signal value SA2 to the first detection signal value SA1. That is, the arithmetic expression F1 is F1=SA2/SA1.

The diagram (c) of Fig. 5 shows the calculation result of the arithmetic expression F1, that is, shows F1=SA2/SA1 against the human body detection distance L. If the fluctuation of the first and the second detection signal values SA1, SA2 is caused by a factor other than detection of a human body in the detection areas A1, A2, the arithmetic expression F1 allows the fluctuation to be cancelled. Specifically, as shown in the diagram (b) of Fig. 5, in a case where the detection signal threshold value SAth is designated for the second detection signal value SA2, fluctuation of the second detection signal value SA2 caused by a factor other than detection of a human body may shift an intersection point of the detection signal threshold value SAth and the second detection signal value SA2, so that a human body detection threshold value distance Lth may shift. Meanwhile, as shown in the diagram (c) of Fig. 5, in a case where the calculation result threshold value F1th is designated for the arithmetic expression F1, fluctuation of the first and the second detection signal values SA1, SA2 caused by a factor other than detection of a human body is canceled, so that the human body detection threshold value distance Lth rarely shifts. The detection range, that is, a range from the human body detecting device 1 to the human body detection threshold value distance Lth, rarely changes by a factor other than detection of a human body. The factor other than detection of a human body includes an environmental factor such as change of an ambient temperature.

Based on this premise, the process performed by the human body detecting device 1 according to the present embodiment will be described by referring back to Fig. 4.

### <Setting of detection range>

After the human body detecting device 1 has been installed onsite, the detection range is set from the detection range setting section 72 before the operation. Specifically, the diagonal-direction detection threshold value F1th to be stored in the diagonal-direction threshold value storage section 66 is set. The diagonal-direction detection threshold value is the calculation result threshold value F1th. For example, an operator operates the detection range setting section 72 and designates the human body detection threshold value distance Lth according to the usage of the human body detecting device 1. The human body detecting device 1 converts the human body detection threshold value distance Lth to the calculation result threshold value F1th, and stores the calculation result threshold value F1th in the diagonal-direction threshold value storage section 66. However, the human body detection threshold value distance Lth which is not converted to the calculation result threshold value F1th, may be stored as it is in the storage section 66.

### <Human body detection process>

While the human body detecting device 1 is operated, the arithmetic expression application unit 62a applies, to the arithmetic expression F1, the first and the second detection signal values SA1 and SA2 provided from the first and the second detection area sensor units 31 and 32, respectively. The calculation result comparison unit 62b compares the calculation result SA2/SA1 of the first and the second detection signal values SA1, SA2 with the calculation result threshold value F1th. In a case where the calculation result F1 is greater than or equal to the calculation result threshold value F1th, the diagonal-direction detection signal SF1 is set to "on", and is outputted to the AND processing section 63. In a case where a human body is between the human body detecting device 1 and the human body detection threshold value distance Lth, the horizontal-direction detection determination section 61 also sets the horizontal-direction detection signal SF0 to "on" and outputs the horizontal-direction detection signal SF0 to the AND processing section 63. Therefore, the AND processing section 63 outputs a human body detection signal to the detection output section 64. The detection output section 64 notifies a unit outside the human body detecting device 1, through the output unit 71, that a human body has been detected in the detection range. The human body detection threshold value distance Lth for determining the detection range may be updated through the detection range setting section 72 during operation.

In the human body detecting device according to the present embodiment described above, among the wide detection areas A1, A2, the reference for the two detection signal values SA1, SA2 is set to determine the detection range, so that the detection area itself need not be changed. Therefore, a complicated operation for adjusting the human body detection distance is not required. The adjusting mechanism need not be mounted to the human body detecting device, thereby reducing the number of components of the human body detecting device.

The threshold value F1th for the calculation result of the arithmetic expression F1 is set to determine the detection range. Therefore, the detection range can be determined merely by designation of the numerical value. The designation of the numerical value is performed more easily than an operation on the adjusting mechanism. Particularly, in a case where the human body detecting device has a communication section, the numerical value can be remotely designated. In conventional art in which the direction of the light receiving element is set by the adjusting mechanism, since the adjusting mechanism is set to one of a plurality of predetermined steps, the detection range is merely changed stepwise. However, in a case where the numerical value is designated, the detection range can be minutely determined.

The detection range is determined according to the arithmetic expression F1 for calculating a ratio between the two detection signal values SA1 and SA2. Therefore, fluctuation of the detection range is little. This is because, in a case where fluctuation of an amount of received detection rays is caused by a factor other than detection of a human body, the ratio F1=S2/S1 allows the fluctuation to be canceled. Therefore, the calculation result is unlikely to be influenced by fluctuation of an amount of received detection rays caused by a factor other than detection of a human body.

Next, the human body detecting devices according to the second to the fourth embodiments will be described. The second to the fourth embodiments are different from the first embodiment in an arithmetic expression to which the arithmetic expression application unit 62a of the diagonal-direction detection determination section 62 in Fig. 4 applies the first and the second detection signal values SA1, SA2. Specifically, an arithmetic expression F2 for the human body detecting device according to the second embodiment is F2=SA1xSA2 for obtaining a product. An arithmetic expression F3 for the human body detecting device according to the third embodiment is F3=SA1+SA2 for obtaining a sum. An arithmetic expression F4 for the human body detecting device according to the fourth embodiment is F4=SA1-SA2 for obtaining a difference.

In a case where the first and the second detection signal values SA1, SA2 contain the same amount of noise components, the arithmetic expression F4 in the fourth embodiment allows the noise components to be cancelled. Therefore, the calculation result is unlikely to be influenced by the noise component.

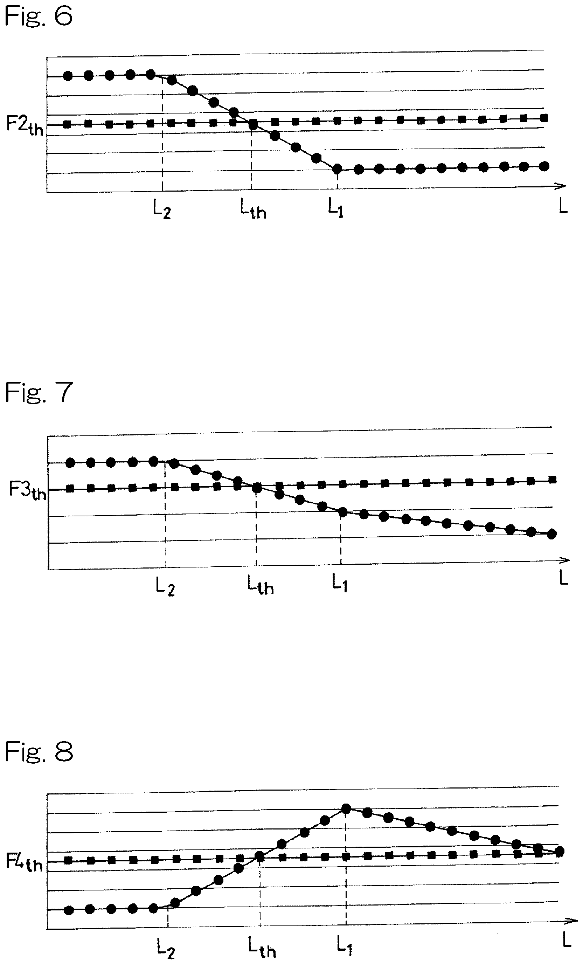

Fig. 6 to Fig. 8 show calculation results of the arithmetic expressions F2 to F4 in the human body detecting devices according to the second to the fourth embodiments, respectively. Similarly to the first embodiment, an operator designates the human body detection threshold value distance Lth according to the usage of the human body detecting device 1, and the human body detecting device 1 converts the human body detection threshold value distance Lth to the calculation result threshold value F2th, F3th, or F4th and stores the calculation result threshold value F2th, F3th, or F4th in the diagonal-direction threshold value storage section 66 (Fig. 4). However, the human body detection threshold value distance Lth which is not converted to the calculation result threshold value F2th, F3th, or F4th may be stored as it is in the storage section 66 (Fig. 4).

The arithmetic expressions F1 to F4 used by the human body detecting devices according to the first to the fourth embodiments are merely examples. Therefore, any arithmetic expression into which the first and the second detection signal values SA1, SA2 are substituted may be used. For example, in the arithmetic expression F2 in the second embodiment and the arithmetic expression F4 in the fourth embodiment, weighting may be performed for SA1 and SA2. That is, F3=α1*SA1+α2*SA2 (in which a1 and a2 each represent any coefficient that may be greater than or equal to 1, or also less than 1) and F4=β1*SA1-β2*SA2 (in which β1 and β2 each represent any coefficient that may be greater than or equal to 1, or also less than 1) may be satisfied. Furthermore, in each of the embodiments, the arithmetic expression application unit 62a applies the first and the second detection signal values SA1, SA2 to one arithmetic expression. However, a plurality of arithmetic expressions may be used for the application.

In setting of the detection range, a parameter, that is, a value to be substituted into an equation or a conditional expression may be set instead of a threshold value being set for the calculation result in the arithmetic expression. In this case, the arithmetic expression application unit 62a substitutes the first and the second detection signal values SA1, SA2 into the equation or the conditional equation in the human body detecting process, and the diagonal-direction detection signal SF1 may be set to "on" in a case where the equation or the conditional equation is satisfied.

Next, the object detecting device according to the fifth embodiment will be described. Throughout this embodiment, the same components as described for the first to the fourth embodiments are denoted by the same reference numerals, and the description thereof is omitted. Also in the present embodiment, an object detecting device 1A is one example of a human body detecting device for detecting a human body.

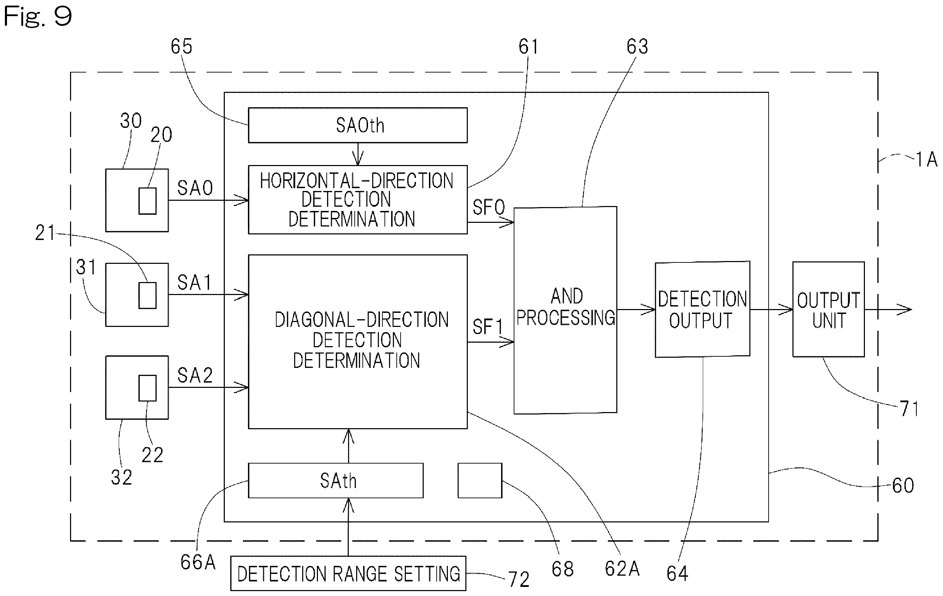

As shown in Fig. 9, the human body detecting device 1A of the fifth embodiment is different from the human body detecting device 1 (Fig. 4) of each of the first to the fourth embodiments in a diagonal-direction detection determination section 62A and a diagonal-direction threshold value storage section 66A in the processing unit 60. The human body detecting device 1A of the present embodiment further includes a threshold value type storage section 68 that indicates whether the diagonal-direction detection threshold value to be stored in the diagonal-direction threshold value storage section 66A is for the first detection signal value SA1 or for the second detection signal value SA2.

The diagonal-direction detection determination section 62A detects a human body in the detection range based on one of the first and the second detection signal values SA1 and SA2. The detection range is determined by setting a reference for the first and the second detection signal values SA1, SA2.

The process performed by the human body detecting device 1A according to the present embodiment will be described.

### <Setting of detection range>

After the human body detecting device 1A has been installed onsite, the detection range is set from the detection range setting section 72 before the operation. Specifically, the diagonal-direction detection threshold value SAth to be stored in the diagonal-direction threshold value storage section 66A is set. The diagonal-direction detection threshold value is the diagonal-direction detection threshold value SAth in the diagram (b) of Fig. 5. For example, an operator operates the detection range setting section 72 and designates the human body detection threshold value distance Lth according to the usage of the human body detecting device 1A The human body detecting device 1A converts the human body detection threshold value distance Lth to the detection signal threshold value SAth, stores the detection signal threshold value SAth in the diagonal-direction threshold value storage section 66A, and stores, in the threshold value type storage section 68, a value indicating that the stored diagonal-direction detection threshold value SAth is for the second detection signal value SA2.

### <Human body detecting process>

While the human body detecting device 1A is operated, the diagonal-direction detection determination section 62A uses one of the first and the second detection signal values SA1, SA2 according to a value stored in the threshold value type storage section 68. For example, in a case where the value indicates that the diagonal-direction detection threshold value SAth is for the second detection signal value SA2, the second detection signal value SA2 is compared with the detection signal threshold value SAth stored in the diagonal-direction threshold value storage section 66A. In a case where the second detection signal value SA2 is greater than or equal to the detection signal threshold value SAth, the diagonal-direction detection signal SF1 is set to "on" and outputted to the AND processing section 63.

In the human body detecting device 1A according to the fifth embodiment described above, among the wide detection areas A1, A2, a reference for the detection signal value SA1, SA2 is set to determine the detection range, similarly to the human body detecting device 1 according to each of the first to the fourth embodiments, so that the detection area itself need not be changed. The detection threshold value is set for the first or the second detection signal SA2 (SA1), thereby easily determining any detection range.

The present invention is not limited to the above-described embodiments, and various additions, modifications, or deletions can be made without departing from the gist of the present invention.

For example, the detection range setting section 72 may be a component of the human body detecting device 1 (1A). The human body detecting device 1 (1A) can be used for any application other than the start switch for the security alarm device. Furthermore, although the two detection area sensor units 31 and 32 for which the detection areas A1, A2 are set in the diagonal direction have been described, the number of the detection area sensor units may be any number that is greater than or equal to two. The diagonal detection areas A1, A2 may overlap each other or may be separated from each other. However, it is preferable that the diagonal detection areas A1 and A2 are in contact with each other or overlap each other without separating from each other.

The object detecting device 1 (1A) is not limited to the human body detecting device, and may be used for detecting any object. For example, a vehicle in addition to a human body may be detected.

The detection ray is specifically an electromagnetic wave, and is preferably an infrared ray. However, the detection ray may be an electromagnetic wave other than an infrared ray. For example, the detection ray may be a radio wave such as a microwave or laser. However, the detection ray preferably has properties that do not allow a distance to an object to be obtained. The detection ray having properties that allow a distance to an object to be obtained is, for example, a detection ray that allows a wave reflected by an object to indicate a distance to the object.

### [Reference Numerals]

- 1(1A): object detecting device
- 31, 32: sensor unit
- 62: object detection determination section
- A1, A2: detection area
- C1, C2: center line
- HD: horizontal direction
- SA1, SA2: detection signal
- H: object (human body)

## Claims

1. An object detecting device comprising:
at least two sensor units configured to receive detection rays from different detection areas, the different detection areas being arranged in an up-down direction and having center lines extending in different diagonally downward directions; and
an object detection determination section configured to detect an object in a detection range based on one or more of at least two detection signals corresponding to amounts of detection rays received by the at least two sensor units, respectively, the detection range being determined by setting a reference for the at least two detection signals.

2. The object detecting device as claimed in claim 1, wherein setting the reference for the at least two detection signals is setting a threshold value for a calculation result of one or a plurality of predetermined arithmetic expressions to which the at least two detection signals are applied.

3. The object detecting device as claimed in claim 1 or 2, wherein the one or the plurality of predetermined arithmetic expressions include one function in which one or the entirety of the at least two detection signals is a parameter.

4. The object detecting device as claimed in claim 3, wherein the one function is a function in which two detection signals among the at least two detection signals are each set as the parameter to obtain a ratio between the at least two detection signals.

5. The object detecting device as claimed in claim 3, wherein the one function is a function in which two detection signals among the at least two detection signals are each set as the parameter to obtain a difference between the at least two detection signals.

6. The object detecting device as claimed in claim 1, wherein setting the reference for the at least two detection signals is setting a detection threshold value for at least one of the at least two detection signals.
